# EUROPEAN PATENT SPECIFICATION

(11) **EP 4 609 503 B1**
(45) Date of publication and mention of the grant of the patent: **28.10.2026**
(21) Application number: 23798513.0
(22) Date of filing: 12.10.2023
(51) Int. Cl.: H02S 20/24, F24S 25/11, F24S 25/70, F24S 25/636

(54) **LOCKING SYSTEM FOR PHOTOVOLTAIC MODULES WITH CONSTRAINT ON THE LONGER SIDE**
VERRIEGELUNGSSYSTEM FÜR PHOTOVOLTAIKMODULE MIT EINSCHRÄNKUNGEN AUF DER LÄNGEREN SEITE
SYSTÈME DE VERROUILLAGE POUR MODULES PHOTOVOLTAÏQUES AVEC CONTRAINTE SUR LE CÔTÉ PLUS LONG

(30) Priority: 28.10.2022 IT 202200022311
(43) Date of publication of application: 03.09.2025
(73) Proprietor: Contact Italia S.r.l., 70022 Altamura (BA) (IT)
(72) Inventor: MAGGI, Francesco, 70022 Altamura (BA) (IT)
(74) Representative: Conversano, Gabriele
(86) International application number: PCT/IB2023/060288
(87) International publication number: WO 2024/089517

(56) References cited:
- CN-A- 108 377 122
- ES-U- 1 078 151
- PT-T- 10 996
- US-A1- 2013 318 894

## Description

### Technical field

The present invention concerns a locking system for photovoltaic modules by means of constraint on their longer side, the system comprising blocks in cement conglomerate.

### Background

Various ways of creating locking systems for photovoltaic modules with preassembled supports, made of different materials such as aluminium, steel and concrete, are known in the state of the art.

Supports made with aluminum profiles require long installation times, since they do not arrive completely assembled on site and require a pre-assembly phase. When installing the photovoltaic modules, these supports make the choice of both the module orientation and the frame thickness less versatile. Furthermore, with these assembly kits, the size of the support center distance is not pre-established but varies depending on the loading conditions present on the site, and consequently the position and quantity of the necessary ballasts is not univocally determined either. Since the load of the ballast blocks is not always uniformly distributed on the roof, particularly in those cases where it is necessary to position the supports at high distances between centres, problems of a structural nature linked to load concentrations on the roof may arise.

In particular, in recent years, the study of innovative technologies has allowed the production of new generation photovoltaic modules, having larger dimensions than ordinary or "standard" photovoltaic modules, which therefore occupy a larger installation surface.

US 2013/318894 A1 relates to a fiber-reinforced concrete ballast tile with lower and upper mounting elements for supporting a photovoltaic module in an inclined angle on flat roofs.

There is therefore a need to adapt locking systems to these new generation photovoltaic modules.

In particular, with such large panels it is often necessary to comply with the requirements provided by the manufacturer regarding the position of the locking points, requirements which vary for each model of photovoltaic panel.

### Summary

The aim of the present invention is therefore to provide a locking system for large photovoltaic modules which overcomes the limits linked to the manufacturing methods known to the state of the art.

In particular, the aim is to provide a locking system for photovoltaic modules that allows the constraint on their longer side in order to guarantee greater stability to the module itself.

Furthermore, the aim of the present invention is to provide a locking system for photovoltaic modules which allows the distance between the locking points to be varied both for horizontal panel installations and for vertical panel installations.

Therefore, according to one aspect of the present invention, a locking system for photovoltaic modules is provided having the characteristics set out in the independent product claim, attached to the present description.

Further embodiments of the invention, preferred and/or particularly advantageous, are described according to the characteristics set out in the attached dependent claims.

### Brief description of the drawings

The invention will now be described with reference to the attached drawings, which illustrate a non-limiting example of implementation, in which:
- figure 1 is an axonometric view of the locking system for photovoltaic modules horizontally, i.e. inclined along the direction of the shorter side, according to a first embodiment of the present invention,
- figure 2 is a detail of the connection of the module to a profile along the longitudinal direction of the module by means of suitable clamps,
- figure 3 is a detail of the connection of the module to a profile along the transversal direction of the module by means of suitable clamps,
- figure 4 is a side view of the photovoltaic module system of figure 1,
- figure 5 is a side installation view of the system according to figure 1,
- figure 6 is an axonometric view of the locking system for vertical photovoltaic modules, i.e. inclined according to the direction of the longer side, according to a further embodiment of the present invention,
- figure 7 is a detail of the connection of the module to a profile along the transversal direction of the module by means of suitable clamps,
- figure 8 is a detail of the connection of the module to a profile along the longitudinal direction of the module by means of suitable clamps,
- figure 9 is a side installation view of the system according to figure 6.

### Detailed description

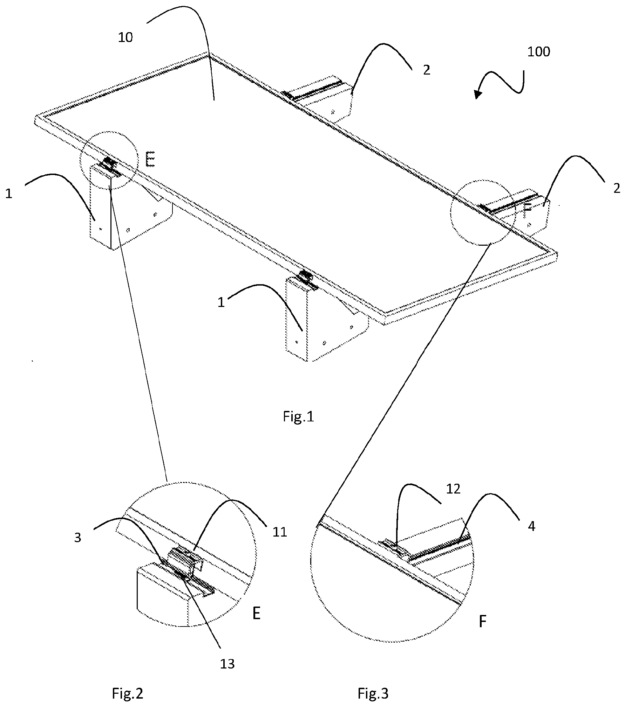

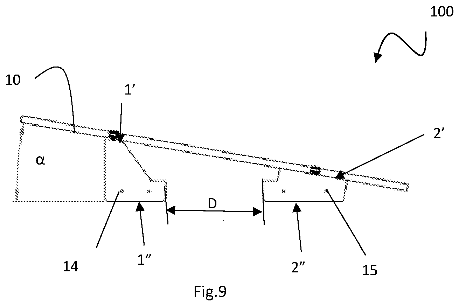

The invention is described in detail below, with reference to the attached figures 1-9. The locking system 100 for photovoltaic modules includes at least two pairs of blocks or ballasts 1, 2 in cement conglomerate.

Both blocks 1,2 have a prismatic shape with an upper surface 1' 2' and a lower surface 1", 2". Furthermore, the upper surfaces 1', 2' have the same inclination α pre-established in the project for the photovoltaic modules while the lower surfaces 2', 2" have the same position as the support surface. In the first block 1 the minimum distance D1 between the upper surface 1' and the lower surface 1" is greater than the minimum distance D2 between the upper surface 2' and the lower surface 2" of the second block 2.

Therefore the lower surfaces 1", 2" are configured in such a way as to allow a stable support on a flat roof of the blocks 1, 2, while the upper surfaces 1', 2' are configured in such a way as to allow the support of a photovoltaic module 10 to be mounted with an inclination α with respect to the roof.

In particular, the locking system 100 described is suitable for large photovoltaic modules, where it is above all the larger side that has a larger dimension than that of standard modules.

The pairs of blocks 1, 2 according to the invention, allow a photovoltaic module 10 to be supported and fixed on four support points, each pair of blocks 1,2 always being positioned along the longer side of the module 10, at a pre-established distance from the corresponding end of module 10, so as to guarantee its stability.

Conveniently, the internal distance D between the first block 1 and the second block 2 is predetermined so as to guarantee coplanarity between the blocks and the correct assembly of the photovoltaic modules. Even more conveniently, the same functionality can be achieved with different inclinations of the blocks.

Furthermore, the same geometry of blocks 1, 2 allows the assembly of photovoltaic modules of different sizes: length of the shorter side between 990 mm and 1350 mm and length of the longer side up to 2300 mm.

According to a first configuration, illustrated in figure 1, the locking system allows the installation of photovoltaic modules arranged horizontally, i.e. inclined along the direction of the shorter side, and has block 1 and block 2 which correspond to each other along the direction of the smaller side of the photovoltaic module 10. In particular, as shown in the details of figures 2 and 3, along the upper surface 1' of the first block 1 there is a metal profile 3 with a "C" shape which, in operation, develops in longitudinal direction with respect to the longer side of the photovoltaic module 10 and along the upper surface 2' of the second block 2 there is a metal profile 4 with a "C" shape which, when installed, develops in a transversal direction with respect to the longer side of the photovoltaic module 10.

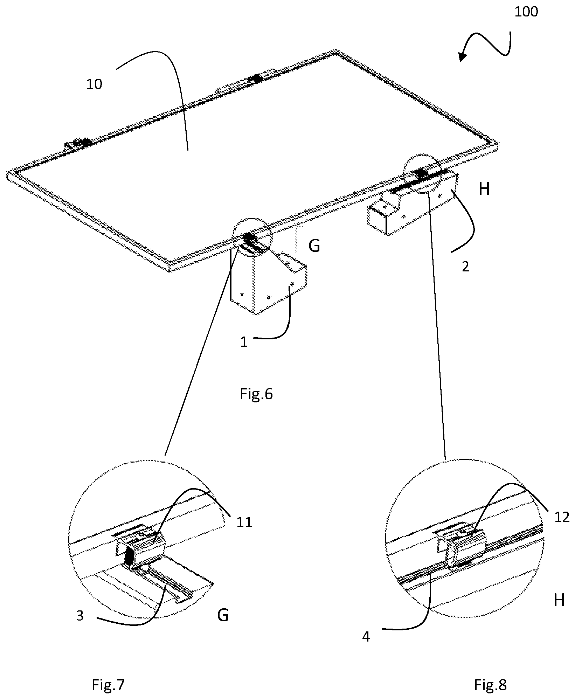

In a second configuration, illustrated in figure 6, the locking system allows photovoltaic modules to be installed vertically, i.e. inclined along the direction of the longer side, and has block 1 and block 2 which correspond to each other along the direction of the longer side. larger than the photovoltaic module 10. In particular, as shown in the details of figures 7 and 8 along the upper surface 1' of the first block 1 there is a metal profile 3 with a "C" shape which, in operation, develops in the direction transversally with respect to the one joining the first 1 and the second block 2 and along the upper surface 2' of the second block 2 there is a metal profile 4 which, in operation, develops in a longitudinal direction with respect to the one joining the first 1 and the second block 2.

Regardless of the chosen configuration, the connection of the module 10 to the metal profiles 3, 4 can conveniently take place by means of suitable clamps 11, 12. Preferably said metal profiles 3, 4 are made of aluminium. It is specified that, as evident from the analysis of figures 6, 7 and 8, the clamps 11, 12 slide along the respective profiles 3,4. Since the profiles 3 of the first block 1 develop along the direction transversal to the longer side of the panel, and the profiles 4 of the second block 2 develop along the longitudinal direction with respect to the longer side of the panel, the presence of clamps sliding along the profiles allows to vary the distance between the two locking points of the panel both with vertical and horizontal mounting. This allows you to comply with the requirements on the distance of the clamping points which are different for each panel model.

Conveniently, inside the metal profiles 3, 4 it is possible to mount the same type of universal clamps 11, 12. The core 13 of the clamp is inserted inside the metal profile 3,4, between the two wings of the "C", while the upper portion of this clamp 11, 12 is configured to rotate and assume any orientation between 0° and 360 ° depending on the vertical or horizontal orientation of the module 10. The versatility of each block 1, 2 allows the photovoltaic module to be mounted in both horizontal and vertical orientation with a pre-established inclination α.

Therefore, the position of the metal profiles 3, 4 and the clamps 11, 12 is such that the photovoltaic module 10, once installed, is stably anchored along its longer sides to said blocks 1, 2 in cement conglomerate, according to the inclination pre-established.

According to a preferential embodiment, each block 1, 2 also includes, on its lateral surface, a pair of lateral through holes 14,15 to allow the assembly of brace bars in both the transverse and longitudinal directions: in the transverse direction with the insertion of round bars, in longitudinal direction with use of box profiles anchored to the ballast with dowels. Each block has a bushing (embedded in the concrete) both on the rear part to allow the assembly of brace bars, and on the upper part of the step to allow the possible assembly of a profile connecting the two blocks (front and rear).

Having described the blocks it is immediate to describe how they are used. To install a row of photovoltaic modules, it will be sufficient to place a sufficient number of blocks side by side to support all the modules provided, taking care to position the blocks at a distance between centers equal to the size of the module. Once the blocks have been positioned, to install the modules it is sufficient to position the modules and tighten the clamps.

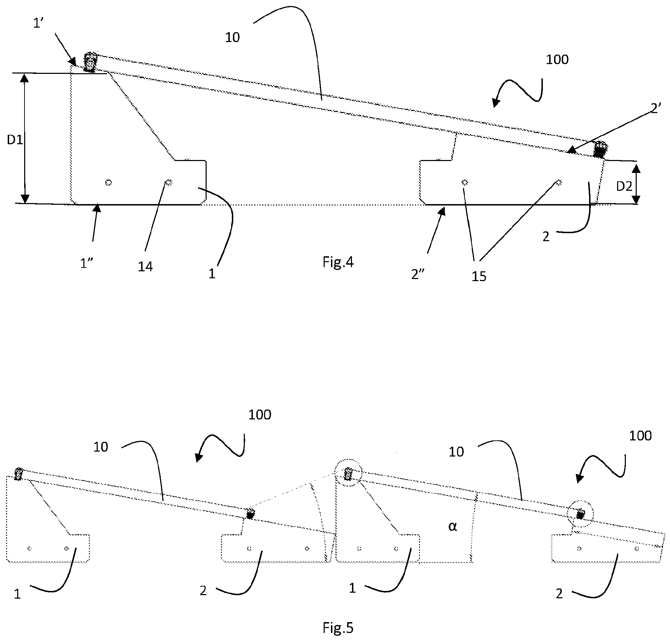

As shown in Figure 5, the modularity of each system allows the installation of contiguous modules aligned with each other and arranged in a pre-established orientation.

The presence of structural fibers of polymeric material in the cement conglomerate increases the load-bearing capacity, toughness and ductility in the shear behavior of the concrete, limiting the cracking phenomenon: the cement conglomerate in fact has a residual resistance after a possible start of crack propagation. The use of fibers also represents a secondary reinforcement and also concomitant to a possible presence of primary structural reinforcement due to the possible use of iron rods embedded in the concrete block. The combination of the two types of structural reinforcement reduces the risk of brittle fracture by increasing the resistance of the entire block to fatigue, impacts and thermal stress. Lastly, the presence of polymer fibers also reduces corrosion problems, lowering the maintenance costs of the entire photovoltaic system.

In addition to the embodiments of the invention, as described above, it should be understood that numerous other variations exist. It should also be understood that such embodiments are exemplary only and do not limit either the scope of the invention, its applications, or its possible configurations. On the contrary, although the above description allows the specialized technician to implement the present invention at least according to one of its exemplary embodiments, it must be understood that many variations of the described components are possible, without thereby departing from the scope of the invention, as defined in the attached claims.

## Claims

1. Locking system (100) for a photovoltaic module (10) comprising at least two pairs of concrete blocks (1,2), each block (1,2) of each pair having:
- an upper surface (1 ', 2') having an inclination (α) and configured in such a way as to allow the support of the photovoltaic module (10), which must have the same inclination (α) on site and
- a lower surface (1 ", 2") configured in such a way as to allow a stable support on a flat surface,
said upper surface (1 ', 2') also comprising a metal profile (3,4) configured to allow photovoltaic module (10) connection to the blocks (1,2) by means of clamps (11, 12)
wherein along the upper surface (1 ') of the first block (1) a metal profile (3) is provided, positioned in a transversal direction with respect to the direction joining said first (1) and second block (2) when installed on site
and along the upper surface (2 ') of the second block (2) a metal profile (4) is provided positioned in a longitudinal direction with respect to the direction joining said first (1) and second block (2) when installed on site.

2. Locking system (100) for photovoltaic modules according to claim 1, wherein the metal profile (3,4) is configured to slidingly couple the core (13) of said clamp (11,12), and by the fact that the upper portion of said clamp (11, 12) is configured to rotate from 0 ° to 360 ° around an axis perpendicular to said upper surface (1 ', 2').

3. Locking system (100) according to claim 1 or 2 **characterized in that** each block (1,2) of each pair of blocks is positioned along the longer side of the photovoltaic module (10).

4. Locking system (100) according to one of the preceding claims, wherein a first block (1) has a minimum distance (D1) between the upper surface (1 ') and the lower surface (1 ") greater than a minimum distance (D2) between the upper surface (2 ') and the lower surface (2") of a second block (2).

5. Locking system (100) according to one of the preceding claims, wherein the photovoltaic module (10) is inclined along the direction of the shorter side and the block (1) and the block (2) correspond to each other along the direction of the side smaller than the photovoltaic module (10).

6. Locking system (100) according to claim 1 or 2, wherein the photovoltaic module (10) is inclined along the direction of the longer side and the first block (1) and the second block (2) correspond to each other along the direction of the longer side of the photovoltaic module (10).

7. Locking system (100) for photovoltaic modules according to one of the preceding claims, wherein the internal distance between said first block (1) and second block (2) is such that, in operation, said blocks (1,2) are at a predetermined distance (D).

8. Locking system (100) for photovoltaic modules according to one of the preceding claims, wherein each of said blocks (1,2) further comprises, on its lateral surface, a pair of through holes (14,15) to allow the mounting of round bars in order to make a rigid connection between different blocks.

## Patentansprüche

1. Verriegelungssystem (100) für ein Photovoltaik-Modul (10), bestehend aus mindestens zwei Paaren von Betonblöcken (1, 2), wobei jeder Block (1, 2) jedes Paares Folgendes aufweist:
- eine obere Fläche (1', 2'), die eine Neigung (α) hat und so konfiguriert ist, dass sie die Unterstützung des Photovoltaik-Moduls (10) gestattet, das die gleiche Neigung (α) vor Ort aufweisen soll und
- eine untere Fläche (1",2"), die so konfiguriert, dass sie eine stabile Unterstützung auf einer ebenen Fläche gestattet,
wobei die obere Fläche (1', 2') außerdem ein Metallprofil (3, 4) umfasst, das so konfiguriert ist, dass es eine Verbindung des Photovoltaik-Moduls (10) mittels Klemmen (11, 12) an den Blöcken (1, 2) gestattet,
wobei entlang der oberen Fläche (1') des ersten Blocks (1) ein Metallprofil (3) vorgesehen ist, das sich quer zur Verbindungsrichtung des ersten (1) und des zweiten Blocks (2) positioniert ist, wenn es vor Ort installiert ist
und entlang der oberen Fläche (2') des zweiten Blocks (2) ein Metallprofil (4) vorgesehen ist, das sich in Längsrichtung der Verbindungsrichtung des ersten (1) und des zweiten Blocks (2) positioniert ist, wenn es vor Ort installiert ist.

2. Verriegelungssystem (100) für Photovoltaik-Module nach Anspruch 1, wobei das Metallprofil (3, 4) konfiguriert ist, um den Kern (13) der Klemme (11, 12) verschieblich zu verbinden und auf der Tatsache, dass der obere Anteil der Klemme (11, 12) konfiguriert ist, um von 0° aus bis 360° um eine Achse zu drehen, die senkrecht zu der oberen Fläche (1', 2') steht.

3. Verriegelungssystem (100) nach Anspruch 1 oder 2, **dadurch gekennzeichnet, dass** jeder Block (1, 2) jedes Blockpaares entlang der längeren Seite des Photovoltaik-Moduls (10) positioniert ist.

4. Verriegelungssystem (100) nach einem der vorhergehenden Ansprüche, wobei ein erster Block (1) einen Mindestabstand (D1) zwischen der oberen Fläche (1') und der unteren Fläche (1") aufweist, die größer als ein Mindestabstand (D2) zwischen der oberen Fläche (2') und die unteren Fläche (2") eines zweiten Blocks (2) ist.

5. Verriegelungssystem (100) nach einem der vorhergehenden Ansprüche, wobei das Photovoltaik-Modul (10) in Richtung der kleineren Seite geneigt ist und der Block (1) und der Block (2) einander in Richtung der kleineren Seite des Photovoltaik-Moduls (10) entsprechen.

6. Verriegelungssystem (100) nach Anspruch 1 oder 2, wobei das Photovoltaik-Modul (10) in Richtung der längeren Seite geneigt ist und der erste Block (1) und der zweite Block (2) in Richtung der längeren Seite des Photovoltaik-Moduls (10) einander entsprechen.

7. Verriegelungssystem (100) für Photovoltaik-Module nach einem der vorhergehenden Ansprüche, wobei der innere Abstand zwischen dem ersten Block (1) und dem zweiten Block (2) so beträgt, dass sich die Blöcke (1, 2) im Betrieb in einem vorher festgelegten Abstand (D) befinden.

8. Verriegelungssystem (100) für Photovoltaik-Module nach einem der vorhergehenden Ansprüche, wobei jeder der Blöcke (1, 2) ferner auf seiner Seitenfläche ein Paar Durchgangslöcher (14, 15) aufweist, um die Montage von Rundstäben zu ermöglichen und eine starre Verbindung zwischen verschiedenen Blöcken herzustellen.

## Revendications

1. Système de verrouillage (100) pour un module photovoltaïque (10) comprenant au moins deux paires de blocs de béton (1, 2), chaque bloc (1, 2) de chaque paire ayant :
- une surface supérieure (1', 2') ayant une inclinaison (α) et configurée de manière à permettre le support du module photovoltaïque (10), qui doit avoir la même inclinaison (α) sur site et
- une surface inférieure (1", 2") configurée de manière à permettre un support stable sur une surface plane,
ladite surface supérieure (1', 2') comprenant également un profil métallique (3, 4) configuré pour permettre une connexion du module photovoltaïque (10) aux blocs (1, 2) au moyen de pinces (11, 12),
dans lequel
le long de la surface supérieure (1') du premier bloc (1) un profil métallique (3) est prévu, positionné dans une direction transversale par rapport à la direction joignant lesdits premier (1) et deuxième bloc (2) lorsqu'ils sont installés sur site,
et le long de la surface supérieure (2') du deuxième bloc (2) un profil métallique (4) est prévu, positionné dans une direction longitudinale par rapport à la direction joignant lesdits premier (1) et deuxième bloc (2) lorsqu'ils sont installés sur site.

2. Système de verrouillage (100) pour modules photovoltaïques selon la revendication 1, dans lequel le profil métallique (3, 4) est configuré pour coupler de manière coulissante le noyau (13) de ladite pince (11, 12), et que la partie supérieure de ladite pince (11, 12) est configurée pour tourner de 0° à 360° autour d'un axe perpendiculaire à ladite surface supérieure (1', 2').

3. Système de verrouillage (100) selon la revendication 1 ou 2 **caractérisé en ce que** chaque bloc (1, 2) de chaque paire de blocs est positionné le long du côté le plus long du module photovoltaïque (10).

4. Système de verrouillage (100) selon l'une des revendications précédentes, dans lequel un premier bloc (1) a une distance minimale (D1) entre la surface supérieure (1') et la surface inférieure (1"), qui est supérieure à une distance minimale (D2) entre la surface supérieure (2') et la surface inférieure (2") d'un deuxième bloc (2).

5. Système de verrouillage (100) selon l'une des revendications précédentes, dans lequel le module photovoltaïque (10) est incliné le long de la direction du côté le plus court et le bloc (1) et le bloc (2) correspondent l'un à l'autre le long de la direction du côté le plus petit que le module photovoltaïque (10).

6. Système de verrouillage (100) selon la revendication 1 ou 2, dans lequel le module photovoltaïque (10) est incliné le long de la direction du côté le plus long et le premier bloc (1) et le deuxième bloc (2) correspondent l'un à l'autre le long de la direction du côté le plus long du module photovoltaïque (10).

7. Système de verrouillage (100) pour modules photovoltaïques selon l'une des revendications précédentes, dans lequel la distance interne entre ledit premier bloc (1) et le deuxième bloc (2) est telle qu'en fonctionnement, lesdits blocs (1, 2) se trouvent à une distance prédéterminée (D).

8. Système de verrouillage (100) pour modules photovoltaïques selon l'une des revendications précédentes, dans lequel chacun desdits blocs (1, 2) comprend en outre, sur sa surface latérale, une paire de trous traversants (14, 15) pour permettre le montage de barres rondes afin de réaliser une connexion rigide entre différents blocs.
